# EUROPEAN PATENT SPECIFICATION

(11) **EP 1 834 243 B1**
(45) Date of publication and mention of the grant of the patent: **01.05.2019**
(21) Application number: 05807741.3
(22) Date of filing: 28.09.2005
(51) Int. Cl.: G06F 21/56

(54) **SYSTEM AND METHOD FOR LOCATING MALWARE**
SYSTEM UND VERFAHREN ZUM FINDEN VON MALWARE
SYSTÈME ET PROCÉDÉ DESTINÉS A LA DÉTECTION DE LOGICIELS MALVEILLANTS

(30) Priority: 01.10.2004 US 956818; 01.10.2004 US 956575; 01.10.2004 US 956274
(43) Date of publication of application: 19.09.2007
(73) Proprietor: Webroot Inc., Broomfield, CO 80021 (US)
(72) Inventor: THOMAS, Steve, Boulder, Colorado 80304 (US); BERTMAN, Justin, R., Erie, Colorado 80516 (US); LISTON, Bryan, M., San Antonio, TX 78258 (US); BONEY, Matthew, L., Longmont, Colorado 80501 (US); HERMAN, Jeffery, Boulder, Colorado 80301 (US)
(74) Representative: Grünecker Patent- und Rechtsanwälte PartG mbB
(86) International application number: PCT/US2005/034873
(87) International publication number: WO 2006/039351

(56) References cited:
- US-A1- 2003 065 926
- US-A1- 2003 065 926
- US-A1- 2003 212 906
- US-A1- 2003 212 906
- US-B1- 6 701 441
- US-B1- 6 785 732

## Description

### FIELD OF THE INVENTION

The present invention relates to systems and methods for locating and identifying malware. In particular, but not by way of limitation, the present invention relates to systems and methods for searching out malware and generating corresponding malware definitions.

### BACKGROUND OF THE INVENTION

Personal computers and business computers are continually attacked by trojans, spyware, and adware, collectively referred to as "malware" or "spyware." These types of programs generally act to gather information about a person or organization-often without the person or organization's knowledge. Some malware is highly malicious. Other malware is non-malicious but may cause issues with privacy or system performance. And yet other malware is actually beneficial or wanted by the user. Unless specified otherwise, "malware" as used herein refers to any of these programs that collects information about a person or an organization.

Software is presently available to detect and remove malware. But as it evolves, the software to detect and remove it must also evolve. Accordingly, current techniques and software for removing malware are not always satisfactory and will most certainly not be satisfactory in the future. Additionally, because some malware is actually valuable to a user, malware-detection software should, in some cases, be able to handle differences between wanted and unwanted malware.

US 6 785 732 B1 discloses downloading information and parsing said information to identify malware. The information may contain URLs to suspicious sites. A database of know-good and known-bad URLs is also disclosed.

US 2003/212906 A1 discloses downloading information, identifying changes to the active program as consequence of downloading said information and creating a definition of malware using the downloaded information.

Current malware removal software uses definitions of known malware to search for and remove files on a protected system. These definitions are often slow and cumbersome to create. Additionally, it is often difficult to initially locate the malware in order to create the definitions. Accordingly, a system and method are needed to address the shortfalls of present technology and to provide other new and innovative features.

### SUMMARY OF THE INVENTION

Exemplary embodiments of the present invention that are shown in the drawings are summarized below. These and other embodiments are more fully described in the Detailed Description section. It is to be understood, however, that there is no intention to limit the invention to the forms described in this Summary of the Invention or in the Detailed Description. One skilled in the art can recognize that there are numerous modifications, equivalents and alternative constructions that fall within the scope of the invention as expressed in the claims.

As previously stated, the above-described embodiments and implementations are for illustration purposes only. Numerous other embodiments, implementations, and details of the invention are easily recognized by those of skill in the art from the following descriptions and claims.

The invention is defined by the scope of the appended claims.

### BRIEF DESCRIPTION OF THE DRAWINGS

Various objects and advantages and a more complete understanding of the present invention are apparent and more readily appreciated by reference to the following Detailed Description and to the appended claims when taken in conjunction with the accompanying Drawings wherein:
FIGURE 1 is a block diagram of one embodiment of the present invention;
FIGURE 2 is a flowchart of one method for identifying URLs that may be associated with malware;
FIGURE 3 is a flowchart of one method for generating malware definitions;
FIGURE 4 is a flowchart of one method for actively browsing a Web site to identify targets; and
FIGURE 5 is a flowchart of one method for searching for malware targets in JavaScript and forms.

### DETAILED DESCRIPTION

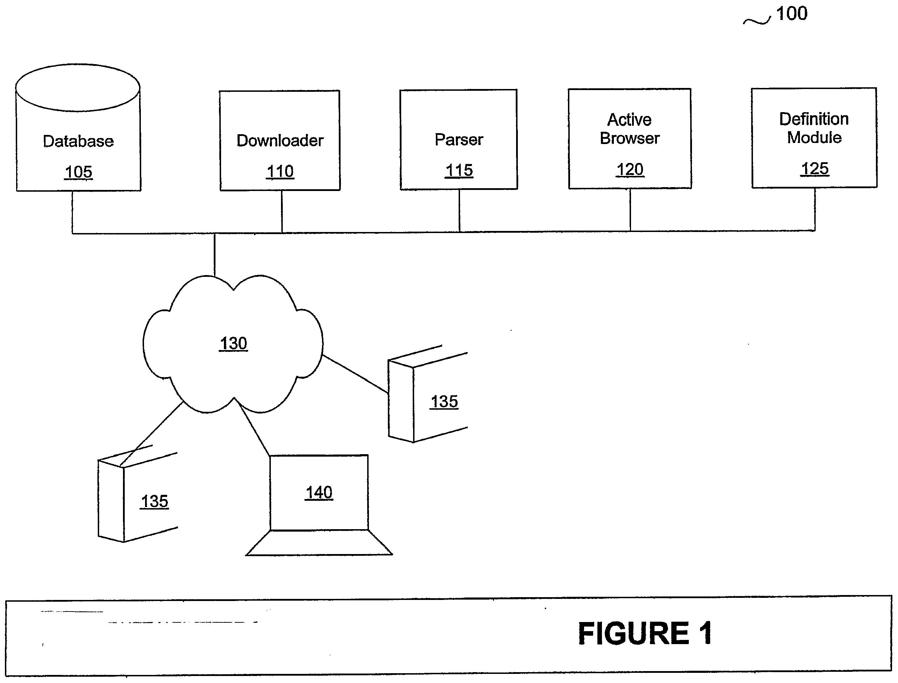

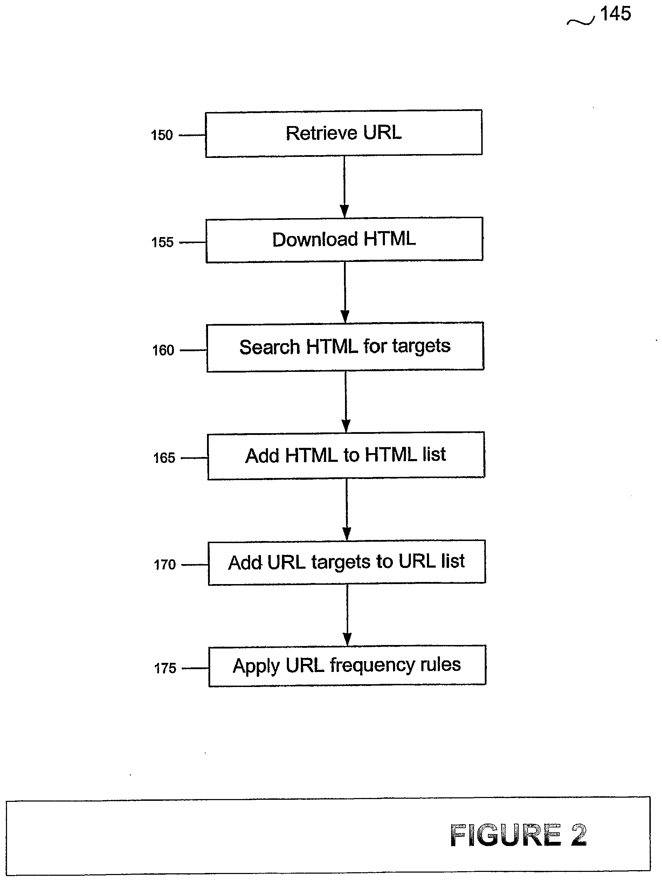

Referring now to the drawings, where like or similar elements are designated with identical reference numerals throughout the several views, and referring in particular to FIGURE 1, it is a block diagram of one embodiment 100 of the present invention. This embodiment includes a database 105, a downloader 110, a parser 115, an active browser 120, and a definition module 125. These components, which are described below, are connected through a network 130 to Web servers 135 and protected computers 140. These components are described briefly with regard to Figure 1, and their operation is further described in the description accompanying Figures 2 through 5.

The database system 105 of Figure 1 can be built on an ORACLE platform or any other database platform and can include several tables or be divided into separate database systems. But assuming that the database 105 is a single database with multiple tables, the tables can be generally categorized as URLs to search, downloaded HTML, downloaded targets, and definitions. (As used herein, "targets" refers to any program, program trace, file, object, exploits, malware activity, or URL that corresponds to malware.)

The URL tables store a list of URLs that should be searched for malware. The URL tables can be populated by crawling the Internet and storing any found links. When searching for URLs linked to malware, the techniques used to identify those URLs sometimes differ from those used by popular search engines such as GOOGLE. For example, malware distributors often try to hide their URLs rather than have them pushed out to the public. GOOGLE's crawling techniques and similar techniques look for these high-traffic links and often miss deliberately-hidden URLs. Embodiments of the present invention, however, specifically seek out hidden URLs, and these techniques are described in more detail below.

In one embodiment, the URLs stored in the URL tables can be stored in association with corresponding data such as a time stamp identifying the last time the URL was accessed, a priority level indicating when to access the URL again, etc. For example, the priority level corresponding to CNN.COM would likely be low because the likelihood of finding malware on a trusted cite like CNN.COM is low. On the other hand, the likelihood of finding malware on a pornography-related site is much higher, so the priority level for the related URL could be set to a high level.

Another table in the database can store HTML code or pointers to the HTML code downloaded from a URL in the URL table. This downloaded HTML code can be used for statistical purposes and for analysis purposes. For example, a hash value can be calculated and stored in association with the HTML code corresponding to a particular URL. When the same URL is accessed again, the HTML code can be downloaded again and the new hash value calculated. If the hash value for both downloads is the same, then the content at that URL has not changed and further processing is not necessarily required.

Two other tables in the database relate to identified malware or targets. (Collectively referred to as a "target.") One table can store the code and/or URL associated with any identified target. And the other table can store the definitions related to a target. These definitions, which are discussed in more detail below, can include a list of the activity caused by the target, a hash function of actual malware code, the actual malware code, etc.

Referring now to the downloader 110 in Figure 1, it retrieves the code associated with a particular URL. For example, the downloader 110 selects a URL from the database and identifies the IP address corresponding to the URL. The downloader 110 then forms and sends a requests to the IP address for the URL. For speed reasons, the downloader 110 may focus its efforts on the HTML, JavaScript, applets, and objects corresponding to the URL. Although this document often discusses HTML, JavaScript, and Java applets, those of skill in the art can understand that embodiments of the present invention can operate on any object within a Web page, including other types of markup languages, other types of script languages, any applet programs such as ACTIVEX from MICROSOFT, and any other downloaded objects. When these specific terms are used, they should be understood to also include generic versions and other vendor versions.

Once the requested information from the URL is received by the downloader 110, the downloader 110 can send it to the database for storage. In certain embodiments, the downloader 110 can open multiple sockets to handle multiple data paths for faster downloading.

Referring now to the parser 115 shown in Figure 1, it is responsible for searching downloaded material for malware and possible pointers to other malware. And when the parser 115 discovers potential malware, the relevant information is provided to the active browser 120 for verification of whether or not it is actually malware.

This embodiment of the parser 115 includes three individual parsers: an HTML parser, a JavaScript parser, and a form parser. The HTML parser is responsible for crawling HTML code corresponding to a URL and locating embedded URLs. The JavaScript parser parses JavaScript, or any script language, embedded in downloaded Web pages to identify embedded URLs and other potential malware. And the form parser identifies forms and fields in downloaded material that require user input for further navigation.

Referring first to the URL parser, it can operate much as a typical Web crawler and traverse links in a Web page. It is generally handed a top level link and instructed to crawl starting at that top level link. Any discovered URLs can be added to the URL table in the database 105.

The parser 115 can also store a priority indication with any URL. The priority indication can indicate the likelihood that the URL will point to content or other URLs that include malware. For example, the priority indication could be based on whether malware was previously found using this URL. In other embodiments, the priority indication is based on whether a URL included links to other malware sites. And in yet other embodiments, the priority indication can indicate how often the URL should be searched. Trusted cites such as CNN.COM, for example, do not need to be searched regularly for malware.

As for the JavaScript parser, it parses (decodes) JavaScript, or other scripts, embedded in downloaded Web pages so that embedded URLs and other potential malware can be more easily identified. For example, the JavaScript parser can decode obfuscation techniques used by malware programmers to hide their malware from identification.

In one embodiment, the JavaScript parser uses a JavaScript interpreter such as the Mozilla browser to identify embedded URLs or hidden malware. For example, the JavaScript interpreter could decode URL addresses that are obfuscated in the JavaScript through the use of ASCII characters or hexadecimal encoding. Similarly, the JavaScript interpreter could decode actual JavaScript programs that have been obfuscated. In essence, the JavaScript interpreter is undoing the tricks used by malware programmers to hide their malware. And once the tricks have been removed, the interpreted code can be searched for text strings and URLs related to malware.

Obfuscation techniques, such as using hexadecimal or ASCII codes to represent text strings, generally indicate the presence of malware. Accordingly, obfuscated URLs can be added to the URL database and indicated as a high priority URL for subsequent crawling. These URLs could also be passed to the active browser immediately so that a malware definition can be generated if necessary. Similarly, other obfuscated JavaScript can be passed to the active browser 120 as potential malware or otherwise flagged.

The form parser identifies forms and fields in downloaded material that require user input for further navigation. For some forms and fields, the form parser can follow the branches embedded in the JavaScript. For other forms and fields, the parser passes the URL associated with the forms or field to the active browser 120 for complete navigation.

The form parser's main goal is to identify anything that could be or could contain malware. This includes, but is not limited to, finding submit forms, button click events, and evaluation statements that could lead to malware being installed on the host machine. Anything that is not able to be verified by the form parser can be sent to the active browser 120 for further inspection. For example, button click events that run a function rather than submitting information could be sent to the active browser 120. Similarly, if a field is checked by server side JavaScript and requires formatted input, like a phone number that requires parenthesis around the area code, then this type of form could be sent to the active browser 120.

Referring now to the active browser 120 shown in Figure 1, it is designed to automatically surf a Web site associated with a URL retrieved from the URL database or passed from the parser 115. In essence, the active browser 120 surfs a Web site as a person would. The active browser 120 generally follows each possible path on the Web site and if necessary, populates any forms, fields, or check boxes to fully navigate the site.

The active browser 120 generally operates on a clean computer system with a known configuration. For example, the active browser 120 could operate on a WINDOWS-based system that operates INTERNET EXPLORER. It could also operate on a Linux-based system operating a Mozilla browser.

As the active browser 120 navigates a Web site, any changes to the configuration of the active browser's computer system are recorded. "Changes" refers to any type of change to the computer system including, changes to a operating system file, addition or removal of files, changing file names, changing the browser configuration, opening communication ports, etc. For example, a configuration change could include a change to the WINDOWS registry file or any similar file for other operating systems. For clarity, the term "registry file" refers to the WINDOWS registry file and any similar type of file, whether for earlier WINDOWS versions or other operating systems, including Linux.

And finally, the definition module 125 shown in Figure 1 is responsible for generating malware definitions that are stored in the database and eventually pushed to the protected computers 140. The definition module 125 can determine which of these changes are associated with malware and which are associated with acceptable activities. For example, the malware definition module 125 could use a series of shields to detect suspicious activities on the active browser 120. The potential malware associated with acceptable activities can be discarded.

Referring now to Figure 2, it is a flowchart of one method 145 for identifying URLs that may be associated with malware. Although this method is not necessarily tied to the architecture shown in claim 1, for convenience and clarity, that architecture is sometimes referred to when describing the method.

For the method of Figure 2, the downloader initially retrieves or otherwise obtains a URL from the database. (Block 150) Typically, the downloader retrieves a high-priority URL or a batch of high-priority URLs. The downloader then retrieves the material, usually a Web page or HTML, associated with the URL. (Block 155) Before further processing the downloaded material, the downloader can compare the material against previously downloaded material from the same URL. For example, the downloader could calculate a cyclic redundancy code (CRC), or some other hash function value, for the downloaded material and compare it against the CRC for the previously downloaded material. If the CRCs match, then the newly downloaded material can be discarded without further processing. But if the two CRCs do not match, then the newly downloaded material is different and should be passed on for further processing.

Assuming that the downloaded page requires further processing, the downloaded material, usually HTML and JavaScript, can be stored in the database 105. (Block 165) It can also be searched for targets such as embedded URLs, JavaScript, potential targets, etc. (Block 160) When it discovers new URLs, they can be stored and a priority indicator can also be calculated for those URLs. (Blocks 170 and 175) For example, URLs mined from trusted Web sites could be given a low priority. Similarly, URLs that were obfuscated in downloaded material or found at a pornography Web site could be given a high priority. The identified URLs and the corresponding priority data can be stored in the URL table in the database 105. These URLs can subsequently be downloaded and searched.

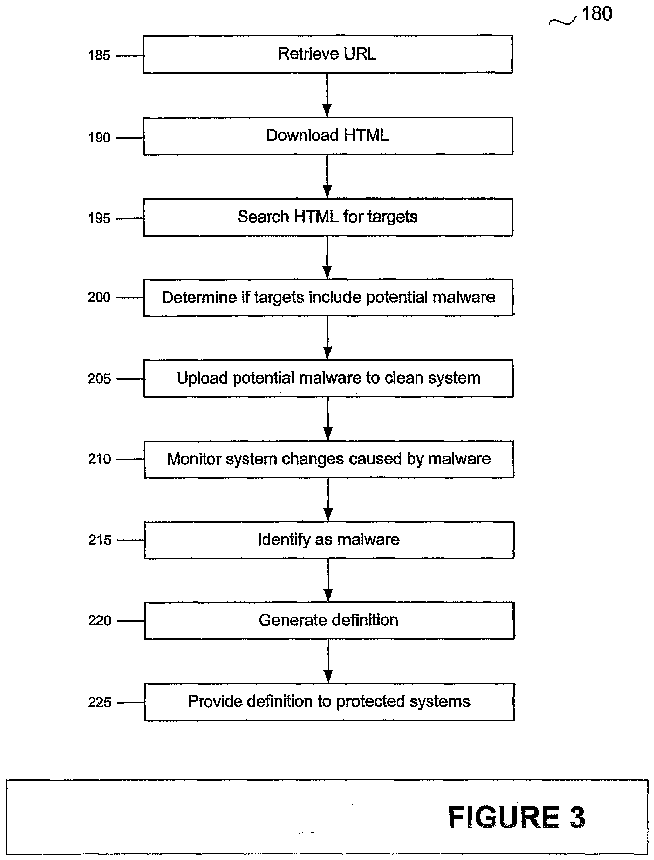

Referring now to Figure 3, it is a flowchart of one method 180 for generating malware definitions. This method is similar to the one described with respect to Figure 2. For example, this method begins by retrieving a URL or batch of URLs and the associated material. (Blocks 185 and 190) The retrieved material is then searched for potential targets. (Block 195) For example, the material can be searched for JavaScript and/or obfuscation techniques. (Block 200)

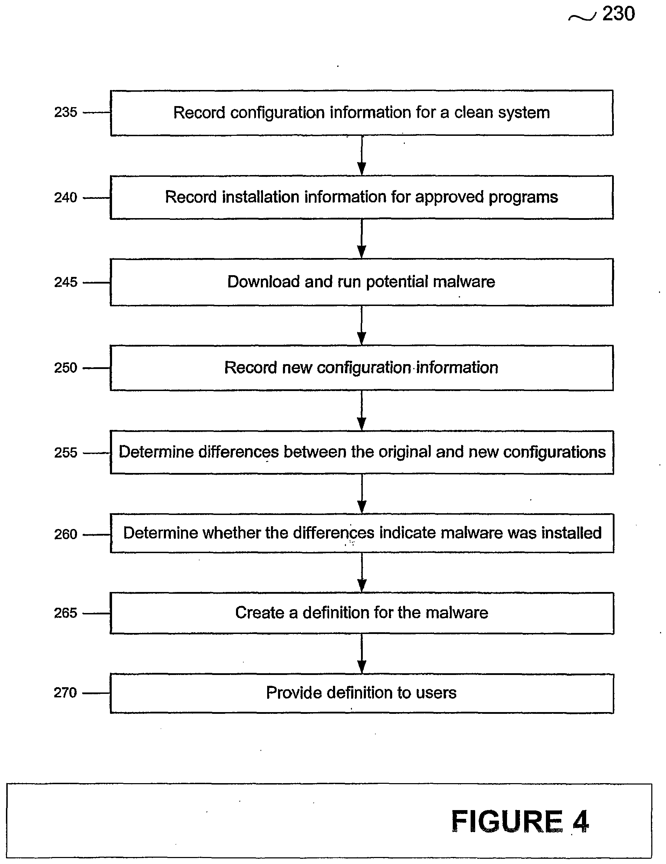

Any potential targets are uploaded and executed on the active browser. (Block 205) If the potential malware makes changes to the active browser, then those changes are recorded and used to determine whether the potential malware is actually malware. (Blocks 210 and 215) For example, the changes could be compared against approved changes from approved software applications. (Discussed in detail with relation to Figure 4.) In a second method, any changes to the active browser could be scanned by a series of shields that monitor for basic behavior indicative of malware. For example, shields can watch for the installation of programs, alteration of the registry file, attempts to access email programs, etc. Typical shields include:
**Favorites Shield** -- The favorites shield monitors for any changes to a browser's list of favorite Web sites.
**Browser-Hijack Shield** -- The browser-hijack shield monitors the WINDOWS registry file for changes to any default Web pages or other user preferences. For example, the browser-hijack shield could watch for changes to the default search page stored in the registry file.
**Host-File Shield** - The host-file shield monitors the host file for changes to DNS addresses. For example, some malware will alter the address in the host file for yahoo.com to point to an ad site. Thus, when a user types in yahoo.com, the user will be redirected to the ad site instead of yahoo's home page.
**Cookie Shield** - The cookie shield monitors for third-party cookies being placed on the protected computer. These third-party cookies are generally the type of cookie that relay information about Web-surfing habits to an ad site.
**Homepage Shield** - The homepage shield monitors the identification of a user's homepage and detects any attempt to change it.
**Plug-in Shield** - This shield monitors for the installation of plug-ins. For example, the plug-in shield looks for processes that attach to browsers and then communicate through the browser. Plug-in shields can monitor for the installation of any plug-in or can compare a plug-in to a malware definition. For example, this shield could monitor for the installation of INTERNET EXPLORER Browser Help Objects
**Zombie shield** -- The zombie shield monitors for malware activity that indicates a protected computer is being used unknowingly to send out spam or email attacks. The zombie shield generally monitors for the sending of a threshold number of emails in a set period of time. For example, if ten emails are sent out in a minute, then the user could be notified and user approval required for further emails to go out. Similarly, if the user's address book is accesses a threshold number of times in a set period, then the user could be notified and any outgoing email blocked until the user gives approval. And in another implementation, the zombie shield can monitor for data communications when the system should otherwise be idle.
**Startup shield** - The startup shield monitors the run folder in the WINDOWS registry for the addition of any program. It can also monitor similar folders, including Run Once, Run OnceEX, and Run Services in WINDOWS-based systems. And those of skill in the art can recognize that this shield can monitor similar folders in Unix, Linux, and other types of systems.
**WINDOWS-messenger shield** -- The WINDOWS-messenger shield watches for any attempts to turn on WINDOWS messenger.
**Installation shield** - The installation shield intercepts the CreateProcess operating system call that is used to start up any new process. This shield compares the process that is attempting to run against the definitions for known malware.
**Memory shield** - The memory shield is similar to the installation shield. The memory-shield scans through running processes matching each against the known definitions and notifies the user if there is a spy running.
**Communication shield** - The communication shield scans for and blocks traffic to and from IP addresses associated with a known malware site. The IP addresses for these sites can be stored on a URL/IP blacklist. This shield can also scan packets for embedded IP addresses and determine whether those addresses are included on a blacklist or white list. In another implementation, the communication shield checks for certain types of communications being transmitted to an outside IP address. For example, the shield may monitor for information that has been tagged as private.

The communication shield could also inspect packets that are coming in from an outside source to determine if they contain any malware traces. For example, this shield could collect packets as they are coming in and will compare them to known definitions before letting them through. The shield would then block any that are associated with known malware.

**Key-logger shield** - The key-logger shield monitors for malware that captures are reports out key strokes by comparing programs against definitions of known key-logger programs. The key-logger shield, in some implementations, can also monitor for applications that are logging keystrokes-independent of any malware definitions. In these types of systems, the shield stores a list of known good programs that can legitimately log keystrokes. And if any application not on this list is discovered logging keystrokes, it is targeted for shut down and removal. Similarly, any key-logging application that is discovered through the definition process is targeted for shut down and removal. The key-logger shield could be incorporated into other shields and does not need to be a stand-alone shield.

Still referring to Figure 3, once potential malware has been identified as actual malware, a malware definition can be generated. (Block 220) The definition can be based on the changes that the malware caused at the active browser 120. For example, if the malware made certain changes to the registry file, then those changes can be added to the definition for that exploit. Protected computers can then be told to look for this type of registry change. Text strings associated with offending JavaScript can also be stored in the definition. Similarly, applets, executable files, objects, and similar files can be added to the definitions.

Once a definition is generated for certain malware, that definition can be stored in the database and then pushed to the protected computer systems. (Block 225) This process of generating definitions is described with regard to Figure 4.

Referring now to Figure 4, it is a flowchart of one method 230 for actively browsing a Web site to identify potential malware. In this method, the active browser 120, or another clean computer system, is initially scanned and the configuration information recorded. (Block 235) For example, the initial scan could record the registry file data, installed files, programs in memory, browser setup, operating system (OS) setup, etc. Next, changes to the configuration information caused by installing approved programs can be identified and stored as part of the active-browser baseline. (Block 240) For example, the configuration changes caused by installing ADOBE ACROBAT could be identified and stored. And when the change information is aggregated together for each of the approved programs, the baseline for an approved system is generated.

The baseline for the clean system can be compared against changes caused by malware programs. For example, when the parser passes a URL to the active browser, the active browser 120 browses the associated Web site as a person would. And consequently, any malware that would be installed on a user's computer is installed on the active browser. The identity of any installed programs would then be recorded.

After the potential malware has been installed or executed on the active browser 120, the active browser's behavior can be monitored. (Block 245) For example, outbound communications initiated by the installed malware can be monitored. Additionally, any changes to the configuration for the active browser can be identified by comparing the system after installation against the records for the baseline system. (Blocks 250 and 255) The identified changes can then be used to evaluate whether a malware definition should be created for this activity. (Block 260) Again, shields could be used to evaluate the potential malware activity.

To avoid creating multiple malware definitions for the same malware, the identified changes to the active browser can be compared against changes made by previously tested programs. If the new changes match previous changes, then a definition should already be on file. Additionally, file names for newly downloaded malware can be compared against file names for previously detected malware. If the names match, then a definition should already be on file. And in yet another embodiment, a hash function value can be calculated for any newly downloaded malware file and it can be compared against the hash function value for known malware programs. If the hash function values match, then a definition should already be on file.

If the newly downloaded malware program is not linked with an existing malware definition, then a new definition is created. (Block 265) The changes to the active browser are generally associated with that definition. For example, the file names for any installed programs can be recorded in the definition. Similarly, any changes to the registry file can be recorded in the definition. And if any actual files were installed, the files and/or a corresponding hash function value for the file can be recorded in the definition.

Once a definition has been created, all or portions of it can be pushed to the protected computer systems. (Block 270) Thus, the protected computer systems can receive prompt definition updates.

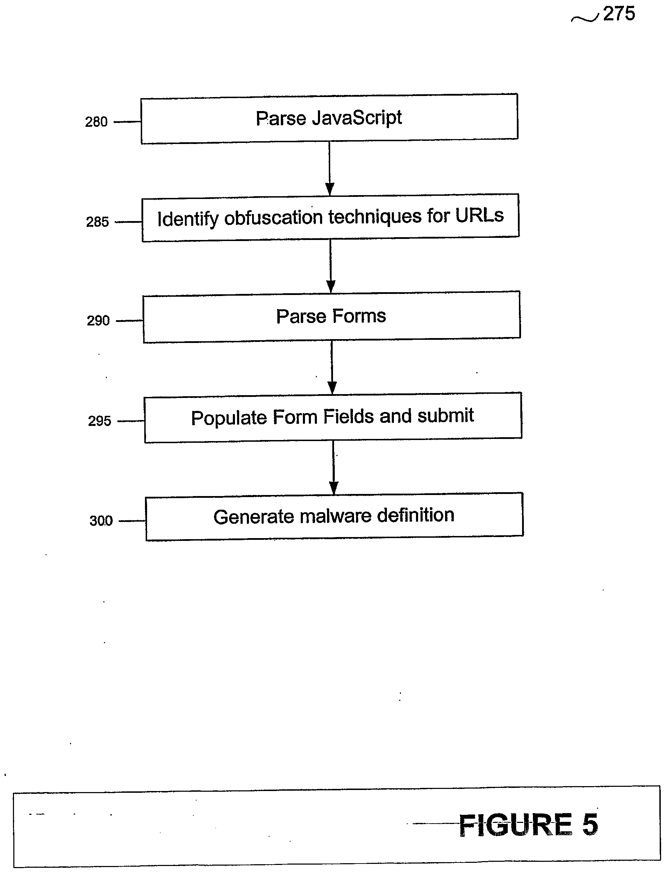

Referring now to Figure 5, it is a flowchart of one method 275 for parsing forms and JavaScript (and similar script languages) to identify malware. In this method, JavaScript embedded in downloaded material is parsed and searched for potential targets or links to potential targets. (Block 280) Because malware-related material, such as URLs and code, can be hidden within JavaScript, the JavaScript should either be interpreted with a JavaScript interpreter or otherwise searched for hidden data.

A typical JavaScript parser is Mozilla provided by the Mozilla Foundation in Mountain View, California. To render the JavaScript, a parser interprets all of the code, including any code that is otherwise obfuscated. For example, JavaScript permits normal text to be represented in non-text formats such as ASCII and hexadecimal. In this non-textual format, searching for text strings or URLs related to potential malware is ineffective because the text strings and URLs have been obfuscated. But with the use of the JavaScript interpreter, these obfuscations are converted into a text-searchable format.

Any URLs that have been obfuscated can be identified as high priority and passed to the database for subsequent navigation. Similarly, when the JavaScript includes any obfuscated code, that code or the associated URL can be passed to the active browser for evaluation. And as previously described, the active browser can execute the code to see what changes it causes.

In another embodiment of the parser, when it comes across any forms that require a user to populate certain fields, then it passes the associated URL to the active browser, which can populate the fields and retrieve further information. (Blocks 290 and 295) And if the subsequent information causes changes to the active browser, then those changes would be recorded and possibly incorporated into a malware definition. (Block 300)

In conclusion, the present invention provides, among other things, a system and method for generating malware definitions. Those skilled in the art can readily recognize that numerous variations and substitutions may be made in the invention, its use and its configuration to achieve substantially the same results as achieved by the embodiments described herein. Accordingly, there is no intention to limit the invention to the disclosed exemplary forms. Many variations, modifications and alternative constructions fall within the scope of the disclosed invention as expressed in the claims.

## Claims

1. A method for identifying Web sites that may include malware, the method comprising:
receiving an initial URL associated with a Web site;
downloading content associated with the initial URL, the content including HTML, a script program, and code related to a button-click event that executes a function;
searching the HTML in the downloaded content for an embedded URL;
identifying a non-obfuscated URL in the script program;
identifying obfuscated text strings in the script program, and interpreting the obfuscated text strings to identify an obfuscated URL in the script program;
receiving a new URL as a result of executing the function;
adding the embedded URL, the non-obfuscated URL, the obfuscated URL and the new URL to a URL database (105);
wherein the URL database stores URLs to be searched for malware,
wherein the URL database stores priority indicators associated with the URLs, wherein an obfuscated URL is associated with a high-priority indicator, and a URL from a trusted Web site is associated with a low priority level,
wherein the high-priority indicator identifies URLs to be initially passed to an active browser (120) for identifying potential malware;
passing an obfuscated URL from the URL database having the associated high-priority indicator to the active browser;
executing the function corresponding to the button-click event by means of the active browser that automatically surfs the Web site associated with the passed obfuscated URL;
verifying by the active browser whether or not the Web site associated with the passed obfuscated URL is actual malware.

2. The method of claim 1, further comprising: searching the HTML for a text string corresponding to malware.

3. The method of claim 1, further comprising: searching the script program for a text string corresponding to malware.

4. A system for generating a definition for malware, the system comprising:
a downloader (110) adapted to download a portion of a Web site,
a parser (115) adapted to:
parse the downloaded portion of the Web site,
identify obfuscated text strings in the downloaded portion, and interpret the obfuscated text strings to identify an obfuscated URL in the downloaded portion,
store URLs to be searched for malware, wherein priority indicators associated with the URLs are stored, wherein an obfuscated URL is associated with a high-priority indicator, and a URL from a trusted Web site is associated with a low priority level, and wherein the high-priority indicator identifies URLs to be initially passed to an active browser (120) for identifying potential malware;
the active browser (120) adapted to automatically surf the Web site associated with an obfuscated URL having the associated high-priority indicator for identifying changes to a known configuration of the active browser,
wherein the changes are caused by the Web site associated with the obfuscated URL; and
a definition module (125) adapted to generate a definition for the potential malware based on the changes to the known configuration,
wherein the definition is for provision to a protected system to prevent malware activity.

5. The system of claim 4, wherein the parser (115) comprises an HTML parser.

6. The system of claim 4, wherein the parser (115) comprises a script parser.

7. The system of claim 6, wherein the script parser comprises: a JavaScript parser.

8. The system of claim 4, wherein the parser (115) comprises a form parser.

9. The system of claim 4, wherein the active browser (120) comprises: a plurality of shield modules.

10. The system of claim 4, further comprising: a URL database (105) adapted to store URL's identified by the parser (115).

11. A method for generating a definition for malware, the method comprising:
parsing a downloaded portion of the Web site;
identifying obfuscated text strings in the downloaded portion, and interpreting the obfuscated text strings to identify an obfuscated URL in the downloaded portion;
storing URLs to be searched for malware and storing priority indicators associated with the URLs, wherein an obfuscated URL is associated with a high-priority indicator, and a URL from a trusted Web site is associated with a low priority level, wherein the high-priority indicator identifies URLs to be initially passed to an active browser (120) for identifying potential malware;
passing a stored obfuscated URL having the associated high-priority indicator to the active browser;
recording the original configuration information for the active browser;
operating potential malware on the active browser system by automatically surfing a Web site associated with the obfuscated URL passed to the active browser;
recording changes to the original configuration information, the changes resulting from operating the potential malware on the active browser system;
determining whether the changes to the original configuration information indicate that the potential malware is malware; and
responsive to determining that the changes indicate that the potential malware is malware, generating a definition for the malware, wherein the definition is for provision to a protected system to prevent malware activity.

12. The method of claim 11, wherein operating potential malware on the active browser system comprises: retrieving content from a URL associated with the potential malware, the URL associated with a Web site; and navigating the Web site associated with the URL.

13. The method of claim 12, wherein operating potential malware on the active browser system further comprises: executing a script included in the content from the URL.

14. The method of claim 12, wherein operating potential malware on the active browser system further comprises: following a link embedded in the content from the URL.

15. The method of claim 12, wherein operating potential malware on the active browser system further comprises: populating a field in a form, the form corresponding to the URL and the form corresponding to a return IP address; submitting the form to the return IP address; and receiving additional content responsive to submitting the form.

16. The method of claim 15, further comprising: evaluating the received additional content for potential malware.

17. The method of claim 12, wherein the received content includes a button click event that is associated with an executable function and wherein the method further comprises:
executing the function associated with the button click event.

18. The method of claim 11, wherein determining whether the changes to the original configuration information indicate that the potential malware is malware comprises:
applying a plurality of shields to evaluate the changes.

19. The method of claim 11, wherein generating a definition for the malware comprises:
including at least some of the determined changes in the definition, whereby the changes indicate malware activity that should be blocked.

20. The method of claim 11, wherein generating a definition for the malware comprises:
detecting a program responsible for the malware; generating a hash function value for the detected program; and adding the hash function value to the generated definition.

## Patentansprüche

1. Verfahren zum Identifizieren von Webseiten, die Malware enthalten können, wobei das Verfahren umfasst:
Empfangen eines ersten einer Webseite zugeordneten URL;
Herunterladen von dem initialen URL zugeordneten Inhalten, wobei der Inhalt HTML, ein Skriptprogramm und einen Code aufweist, der sich auf ein Tastenklickereignis bezieht, das eine Funktion ausführt;
Durchsuchen der HTML im heruntergeladenen Inhalt nach einem eingebetteten URL;
Identifizieren eines nicht verschleierten URL im Skriptprogramm;
Identifizieren von verschleierten Textzeichenfolgen im Skriptprogramm und Interpretieren der verschleierten Textzeichenfolgen, um einen verschleierten URL im Skriptprogramm zu identifizieren;
Empfangen eines neuen URL als Ergebnis der Ausführung der Funktion;
Hinzufügen des eingebetteten URL, des nicht verschleierten URL, des verschleierten URL und des neuen URL zu einer URL Datenbank (105);
wobei die URL Datenbank URLs speichert, die nach Malware zu durchsuchen sind,
wobei die URL Datenbank den URLs zugeordnete Prioritätsindikatoren speichert, wobei ein verschleierter URL einem Indikator mit hoher Priorität zugeordnet wird und ein URL von einer vertrauenswürdigen Webseite einem niedrigen Prioritätslevel zugeordnet wird,
wobei der Indikator mit hoher Priorität URLs identifiziert, die zunächst an einen aktiven Browser (120) weiterzuleiten sind, um potenzielle Malware zu identifizieren;
Weiterleiten eines verschleierten URL aus der URL Datenbank mit dem zugeordneten Indikator mit hoher Priorität an den aktiven Browser;
Ausführen der Funktion entsprechend dem Tastenklickereignis mithilfe des aktiven Browsers, der automatisch auf der Webseite surft, die der weitergeleiteten verschleierten URL zugeordnet ist;
Verifizieren durch den aktiven Browser, ob die dem weitergeleiteten verschleierten URL zugeordnete Webseite tatsächlich Malware ist oder nicht.

2. Verfahren nach Anspruch 1, das des Weiteren umfasst: Durchsuchen der HTML nach einer Textzeichenfolge entsprechend der Malware.

3. Verfahren nach Anspruch 1, das des Weiteren umfasst: Durchsuchen des Skriptprogramms nach einer Textzeichenfolge entsprechend der Malware.

4. System zum Erzeugen einer Definition für Malware, wobei das System umfasst:
einen Downloader (110), der angepasst ist, um ein Teil einer Webseite herunterzuladen,
einen Parser (115), der angepasst ist zum:
Analysieren des heruntergeladenen Teils der Webseite,
Identifizieren von verschleierten Textzeichenfolgen im heruntergeladenen Teil und Interpretieren der verschleierten Textzeichenfolgen, um einen verschleierten URL im heruntergeladenen Teil zu identifizieren,
Speichern von URLs, die nach Malware zu durchsuchen sind, wobei den URLs zugeordnete Prioritätsindikatoren gespeichert werden, wobei ein verschleierter URL einem Indikator mit hoher Priorität zugeordnet wird und ein URL von einer vertrauenswürdigen Webseite einem niedrigen Prioritätslevel zugeordnet wird, und wobei der Indikator mit hoher Priorität URLs identifiziert, die zunächst an einen aktiven Browser (120) zum Identifizieren potenzieller Malware weiterzuleiten sind;
den aktiven Browser (120), der angepasst ist, um automatisch auf der Webseite zu surfen, die einem verschleierten URL mit dem zugeordneten Indikator mit hoher Priorität zum Identifizieren von Änderungen an einer bekannten Konfiguration des aktiven Browsers zugeordnet ist,
wobei die Änderungen durch die dem verschleierten URL zugeordnete Webseite verursacht werden; und
ein Definitionsmodul (125), das angepasst ist, um eine Definition für die potenzielle Malware auf der Basis der Änderungen an der bekannten Konfiguration zu erzeugen,
wobei die Definition für ein geschütztes System vorgesehen ist, um eine Malware-Aktivität zu verhindern.

5. System nach Anspruch 4, wobei der Parser (115) einen HTML Parser umfasst.

6. System nach Anspruch 4, wobei der Parser (115) einen Skriptparser umfasst.

7. System nach Anspruch 6, wobei der Skriptparser umfasst: einen JavaSkriptparser.

8. System nach Anspruch 4, wobei der Parser (115) einen Formularparser umfasst.

9. System nach Anspruch 4; wobei der aktive Browser (120) umfasst: eine Vielzahl von Abschirmmodulen.

10. System nach Anspruch 4, das des Weiteren umfasst: eine URL Datenbank (105), die angepasst ist, um durch den Parser (115) identifizierte URLs zu speichern.

11. Verfahren zum Erzeugen einer Definition für Malware, wobei das Verfahren umfasst:
Parsen eines heruntergeladenen Teils der Webseite;
Identifizieren von verschleierten Textzeichenfolgen im heruntergeladenen Teil und Interpretieren der verschleierten Textzeichenfolgen, um einen verschleierten URL im heruntergeladenen Teil zu identifizieren;
Speichern von URLs, die nach Malware zu durchsuchen sind, und Speichern von den URLs zugeordneten Prioritätsindikatoren, wobei ein verschleierter URL einem Indikator mit hoher Priorität zugeordnet wird und ein URL von einer vertrauenswürdigen Webseite einem niedrigen Prioritätslevel zugeordnet wird, wobei der Indikator mit hoher Priorität URLs identifiziert, die zunächst an einen aktiven Browser (120) zum Identifizieren potenzieller Malware weiterzuleiten sind;
Weiterleiten eines gespeicherten verschleierten URL mit dem zugeordneten Indikator mit hoher Priorität an den aktiven Browser;
Aufzeichnen der originalen Konfigurationsinformationen für den aktiven Browser;
Betreiben potenzieller Malware auf dem aktiven Browsersystem durch automatisches Surfen auf einer dem verschleierten URL zugeordneten Webseite, die an den aktiven Browser weitergeleitet wurde;
Aufzeichnen von Änderungen an den originalen Konfigurationsinformationen, wobei sich die Änderungen aus dem Betreiben der potenziellen Malware auf dem aktiven Browsersystem ergeben;
Bestimmen, ob die Änderungen an den originalen Konfigurationsinformationen anzeigen, dass die potenzielle Malware Malware ist; und
in Reaktion auf das Bestimmen, dass die Änderungen anzeigen, dass die potenzielle Malware Malware ist, Erzeugen einer Definition für die Malware, wobei die Definition für ein geschütztes System vorgesehen ist, um eine Malware-Aktivität zu verhindern.

12. Verfahren nach Anspruch 11, wobei das Betreiben potenzieller Malware auf dem aktiven Browsersystem umfasst: Abrufen von Inhalten von einem der potenziellen Malware zugeordneten URL, wobei der URL einer Webseite zugeordnet ist; und Navigieren auf der dem URL zugeordneten Webseite.

13. Verfahren nach Anspruch 12, wobei das Betreiben potenzieller Malware auf dem aktiven Browsersystem des Weiteren umfasst: Ausführen eines Skripts, das in dem Inhalt von dem URL enthalten ist.

14. Verfahren nach Anspruch 12, wobei das Betreiben potenzieller Malware auf dem aktiven Browsersystem des Weiteren umfasst: Folgen eines in den Inhalt von dem URL eingebetteten Links.

15. Verfahren nach Anspruch 12, wobei das Betreiben potenzieller Malware auf dem aktiven Browsersystem des Weiteren umfasst: Ausfüllen eines Feldes in einem Formular, dem Formular entsprechend dem URL und dem Formular entsprechend einer IP Rückadresse; Absenden des Formulars an die IP Rückadresse; und Empfangen zusätzlicher Inhalte in Reaktion auf das Absenden des Formulars.

16. Verfahren nach Anspruch 15, das des Weiteren umfasst: Überprüfen des empfangenen zusätzlichen Inhalts auf potenzielle Malware.

17. Verfahren nach Anspruch 12, wobei der empfangene Inhalt ein Tastenklickereignis aufweist, das einer ausführbaren Funktion zugeordnet ist und wobei das Verfahren des Weiteren umfasst: Ausführen der dem Tastenklickereignis zugeordneten Funktion.

18. Verfahren nach Anspruch 11, wobei das Bestimmen, ob die Änderungen an den originalen Konfigurationsinformationen anzeigen, dass die potenzielle Malware Malware ist, umfasst: Anwenden einer Vielzahl von Abschirmungen, um die Änderungen zu überprüfen.

19. Verfahren nach Anspruch 11, wobei das Erzeugen einer Definition für die Malware umfasst: Aufweisen wenigstens einiger der bestimmten Änderungen in der Definition, wobei die Änderungen eine Malware-Aktivität anzeigen, die blockiert werden sollte.

20. Verfahren nach Anspruch 11, wobei das Erzeugen einer Definition für die Malware umfasst: Erkennen eines für die Malware verantwortlichen Programms; Erzeugen eines Hash-Funktionswertes für das erkannte Programm und Hinzufügen des Hash-Funktionswertes zu der erzeugten Definition.

## Revendications

1. Procédé d'identification de sites web qui peuvent contenir un logiciel malveillant, le procédé comprenant :
la réception d'un URL initial associé à un site web ;
le téléchargement d'un contenu associé à l'URL initial, le contenu comprenant du code HTML, un programme en script, et un code relatif à un événement de clic de bouton qui exécute une fonction ;
la recherche du code HTML dans le contenu téléchargé pour un URL intégré ;
l'identification d'un URL non offusqué dans le programme en script ;
l'identification de chaînes de texte offusquées dans le programme en script, et l'interprétation des chaînes de texte offusquées pour identifier un URL offusqué dans le programme en script ;
la réception d'un nouvel URL comme résultat de l'exécution de la fonction ;
l'ajout de l'URL intégré, de l'URL non offusqué, de l'URL offusqué et du nouvel URL à une base de données d'URL (105) ;
dans lequel la base de données d'URL stocke des URL où un logiciel malveillant doit être recherché,
dans lequel la base de données d'URL stocke des indicateurs de priorité associés aux URL,
dans lequel un URL offusqué est associé à un indicateur de haute priorité, et un URL d'un site web de confiance est associé à un niveau de basse priorité,
dans lequel l'indicateur de haute priorité identifie des URL à transmettre initialement à un navigateur actif (120) pour identifier un logiciel malveillant potentiel ;
la transmission au navigateur actif d'un URL offusqué provenant de la base de données d'URL ayant l'indicateur de haute priorité associé ;
l'exécution de la fonction correspondant à l'évènement de clic de bouton à l'aide du navigateur actif qui navigue automatiquement vers le site web associé à l'URL offusqué transmis ;
la vérification par le navigateur actif du fait que le site web associé à l'URL offusqué transmis est ou non véritablement un logiciel malveillant.

2. Procédé selon la revendication 1, comprenant en outre : la recherche dans le HTML d'une chaîne de texte correspondant à un logiciel malveillant.

3. Procédé selon la revendication 1, comprenant en outre : la recherche dans le programme en script d'une chaîne de texte correspondant à un logiciel malveillant.

4. Système de génération d'une définition de logiciel malveillant, le système comprenant :
un téléchargeur (110) adapté pour télécharger une portion d'un site web,
un analyseur syntaxique (115) adapté pour :
l'analyse syntaxique de la portion téléchargée du site web,
l'identification de chaînes de texte offusquées dans la portion téléchargée, et l'interprétation des chaînes de texte offusquées pour identifier un URL offusqué dans la portion téléchargée,
le stockage d'URL où un logiciel malveillant doit être recherché, dans lequel sont stockés des indicateurs de priorité associés aux URL, dans lequel un URL offusqué est associé à un indicateur de haute priorité, et un URL d'un site web de confiance est associé à un niveau de basse priorité, et dans lequel l'indicateur de haute priorité identifie des URL à transmettre initialement à un navigateur actif (120) pour identifier un logiciel malveillant potentiel ;
le navigateur actif (120) adapté pour naviguer automatiquement sur le site web associé à un URL offusqué comportant l'indicateur de haute priorité associé pour identifier des changements d'une configuration connue du navigateur actif,
dans lequel les changements sont causés par le site web associé à l'URL offusqué ; et
un module de définition (125) adapté pour générer une définition pour le logiciel malveillant potentiel sur base des changements de la configuration connue,
dans lequel la définition est destinée à être pourvue à un système protégé pour éviter l'activité d'un logiciel malveillant.

5. Système selon la revendication 4, dans lequel l'analyseur syntaxique (115) comprend un analyseur syntaxique de HTML.

6. Système selon la revendication 4, dans lequel l'analyseur syntaxique (115) comprend un analyseur syntaxique de script.

7. Système selon la revendication 6, dans lequel l'analyseur syntaxique de script comprend : un analyseur syntaxique de JavaScript.

8. Système selon la revendication 4, dans lequel l'analyseur syntaxique (115) comprend un analyseur syntaxique de formulaire.

9. Système selon la revendication 4, dans lequel le navigateur actif (120) comprend : une pluralité de modules de protection.

10. Système selon la revendication 4, comprenant en outre : une base de données d'URL (105) adaptée pour stocker des URL identifiés par l'analyseur syntaxique (115) .

11. Procédé de génération d'une définition de logiciel malveillant, le procédé comprenant :
l'analyse syntaxique d'une portion téléchargée du site web ;
l'identification de chaînes de texte offusquées dans la portion téléchargée, et l'interprétation des chaînes de texte offusquées pour identifier un URL offusqué dans la portion téléchargée ;
le stockage des URL où un logiciel malveillant doit être recherché, et le stockage d'indicateurs de priorité associés aux URL, dans lequel un URL offusqué est associé à un indicateur de haute priorité, et un URL provenant d'un site web de confiance est associé à un niveau de basse priorité, dans lequel l'indicateur de haute priorité identifie des URL à transmettre initialement à un navigateur actif (120) pour identifier un logiciel malveillant potentiel ;
la transmission au navigateur actif d'un URL offusqué stocké ayant l'indicateur de haute priorité associé ;
l'enregistrement de l'information de configuration originale pour le navigateur actif ;
l'utilisation du logiciel malveillant potentiel sur le système du navigateur actif en naviguant automatiquement vers un site web associé à l'URL offusqué transmis au navigateur actif ;
l'enregistrement de changements de l'information de configuration originale, les changements résultant de l'utilisation du logiciel malveillant potentiel sur le système du navigateur actif ;
la détermination du fait que les changements de l'information de configuration originale indiquent ou non que le logiciel malveillant potentiel est un logiciel malveillant ; et
en réponse à la détermination du fait que les changements indiquent que le logiciel malveillant potentiel est bien un logiciel malveillant, la génération d'une définition pour le logiciel malveillant, dans lequel la définition est destinée à être pourvue à un système protégé pour éviter l'activité d'un logiciel malveillant.

12. Procédé selon la revendication 11, dans lequel l'utilisation d'un logiciel malveillant potentiel sur le système du navigateur actif comprend : l'extraction, sur l'URL associé à un site web, d'un contenu provenant d'un URL associé au logiciel malveillant potentiel ; et la navigation vers le site web associé à l'URL.

13. Procédé selon la revendication 12, dans lequel l'utilisation d'un logiciel malveillant potentiel sur le système du navigateur actif comprend en outre : l'exécution d'un script inclus dans le contenu provenant de l'URL.

14. Procédé selon la revendication 12, dans lequel l'utilisation d'un logiciel malveillant potentiel sur le système du navigateur actif comprend en outre : le suivi d'un lien intégré dans le contenu provenant de l'URL.

15. Procédé selon la revendication 12, dans lequel l'utilisation d'un logiciel malveillant potentiel sur le système du navigateur actif comprend en outre : la population d'un champ dans un formulaire, le formulaire correspondant à l'URL et le formulaire correspondant à une adresse IP de renvoi ; l'envoi du formulaire à l'adresse IP de renvoi ; et la réception d'un contenu additionnel en réponse à l'envoi du formulaire.

16. Procédé selon la revendication 15, comprenant en outre : l'évaluation de la présence d'un logiciel malveillant potentiel dans le contenu additionnel reçu.

17. Procédé selon la revendication 12, dans lequel le contenu reçu comprend un événement de clic de bouton qui est associé à une fonction exécutable, et dans lequel le procédé comprend en outre : l'exécution de la fonction associée à l'évènement de clic de bouton.

18. Procédé selon la revendication 11, dans lequel la détermination du fait que les changements de l'information de configuration originale indiquent ou non que le logiciel malveillant potentiel est un logiciel malveillant comprend : l'application d'une pluralité de protections pour évaluer les changements.

19. Procédé selon la revendication 11, dans lequel la génération d'une définition pour le logiciel malveillant comprend : l'inclusion d'au moins certains des changements déterminés dans la définition, moyennant quoi les changements indiquent une activité de logiciel malveillant qui doit être bloquée.

20. Procédé selon la revendication 11, dans lequel la génération d'une définition pour le logiciel malveillant comprend : la détection d'un programme responsable du logiciel malveillant ; la génération d'une valeur de fonction de hachage pour le programme détecté ; et l'ajout de la valeur de fonction de hachage à la définition générée.
